# EUROPÄISCHE PATENTSCHRIFT

(11) **EP 0 990 290 B1**
(45) Veröffentlichungstag und Bekanntmachung des Hinweises auf die Patenterteilung: **31.01.2001**
(21) Anmeldenummer: 98936169.6
(22) Anmeldetag: 10.06.1998
(51) Int. Cl.: H02G 9/04

(54) **EINERDBARES KABELKANALELEMENT**
UNDERGROUND CABLE DUCT ELEMENT
ELEMENT DE CANIVEAU DE CABLES ENTERRABLE

(30) Priorität: 19.06.1997 DE 19725976
(43) Veröffentlichungstag der Anmeldung: 05.04.2000
(73) Patentinhaber: Invatec Kunststofftechnik GmbH & Co. KG, 74589 Satteldorf (DE)
(72) Erfinder: MÜNCH, Reinhold, D-74653 Künzelsau (DE)
(74) Vertreter: Patentanwälte Rüger, Barthelt & Abel
(86) Internationale Anmeldenummer: DE9801623
(87) Internationale Veröffentlichungsnummer: WO9859400

(56) Entgegenhaltungen:
- EP-A- 0 641 897
- DE-A- 4 307 260
- DE-U- 29 501 017
- FR-A- 2 727 261

## Beschreibung

Die Erfindung betrifft ein U-förmiges einerdbares Kabelkanalelement nach dem Oberbegriff des Patentanspruchs 1.

Ein solches Kabelkanalelement ist beispielsweise aus DE 43 07 260 C2 bekannt.

Die Erfindung beschäftigt sich mit dem Problem, ein gattungsgemäßes Kabelkanalelement bei möglichst geringem Materialeinsatz als äußerst steife Konstruktion auszubilden. Ferner soll das Kabelkanalelement mit einem aufklappbaren Deckel versehen werden können, der in Verschlußstellung sicher gegen ein nicht gewolltes Herausnehmen arretiert ist. Des weiteren soll bei dem Kanalelement in eingeerdetem Zustand außen an den Seitenwänden anstehendes Wasser im Sinne einer Drainage ohne das Vorsehen zusätzlicher besonderer Drainagemittel gut nach unten und um den Boden des Kanales herum abfließen können. Auch eine gute Verbindung der Kabelkanalelemente untereinander ist ein verfolgtes Ziel.

Das an erster Stelle genannte Problem wird bereits durch eine Ausführung nach dem kennzeichnenden Merkmal des Patentanspruchs 1 gelöst.

Zweckmäßige Ausgestaltungen, mit denen zusätzlich auch noch die übrigen vorstehend genannten Probleme in überraschend einfacher und guter Weise gelöst werden, sind Gegenstand der Unteransprüche.

Eine nähere Erläuterung der erfindungsgemäßen Lehre, bei der auch die im einzelnen vorliegenden Vorteile angegeben werden, erfolgt nachstehend im Zusammenhang mit der Beschreibung gezeichneter Ausführungsbeispiele.

In der Zeichnung zeigen
- Fig. 1: eine perspektivische Darstellung eines mit einem aufklappbaren Deckel abgedeckten U-förmigen Kabelkanalelementes mit an dem vorderen Ende aufgebrochen gezeichnetem Deckel,
- Fig. 2: eine Ansicht des Kabelkanalelementes auf das hintere Ende des Kabelkanalelementes nach Fig. 1 mit teilweise aufgeklapptem Deckel,
- Fig. 3: eine Draufsicht auf ein Kabelkanalelement von oben,
- Fig. 4: eine Seitenansicht des Kabelkanales in Richtung quer zur Längserstreckung des Kabelkanalelementes,
- Fig. 5: eine Ansicht des Kabelkanales in Richtung zu dessen Längsachse,
- Fig. 6a: einen Schnitt nach Linie VI-VI durch das Kabelkanalelement in Fig. 3,
- Fig. 6b: eine vergrößerte Darstellung des Details A in Fig. 3,
- Fig. 7: eine Draufsicht auf einen auf das Kabelkanalelement aufklappbar aufsetzbaren Deckel von oben,
- Fig. 8: eine Ansicht des Deckels von der Seite,
- Fig. 9: eine vergrößerte Darstellung des Details B in Fig. 7,
- Fig. 10: eine Detaildarstellung einer in dem Deckel des Kabelkanalelementes gelagerten Verschlußschraube im Bereich des Details B,
- Fig. 11: Schnappverschlußmittel für einen Verschluß des Deckels innerhalb des Kabelkanalelementes in einem Schnitt,
- Fig. 12: eine Ansicht auf das Schnappverschlußelement innerhalb des oberen Randbereiches einer Seitenwand des Kabelkanalelementes in einer Ausschnittdarstellung,
- Fig. 13: eine Draufsicht auf miteinander verbundene Enden zweier aneinandergefügter Kabelkanalelemente bei abgebrochener Darstellung der Enden der Kabelkanalelemente,
- Fig. 14: eine Seitenansicht der in Fig. 13 gezeigten Verbindung zweier aneinandergefügter Kabelkanalelemente mit einem aufgebrochenen unteren Bereich der Kabelkanal-Seitenwand,
- Fig. 15: eine Seitenansicht überlappend aneinandergefügter Deckel zweier angrenzender Kabelkanalelemente,
- Fig. 16: einen Erdnagel mit Widerhaken,
- Fig. 17: die Ansicht eines Innenraumteilers für den Innenraum eines Kabelkanalelementes mit angedeuteten Kabelkanalseitenwänden.

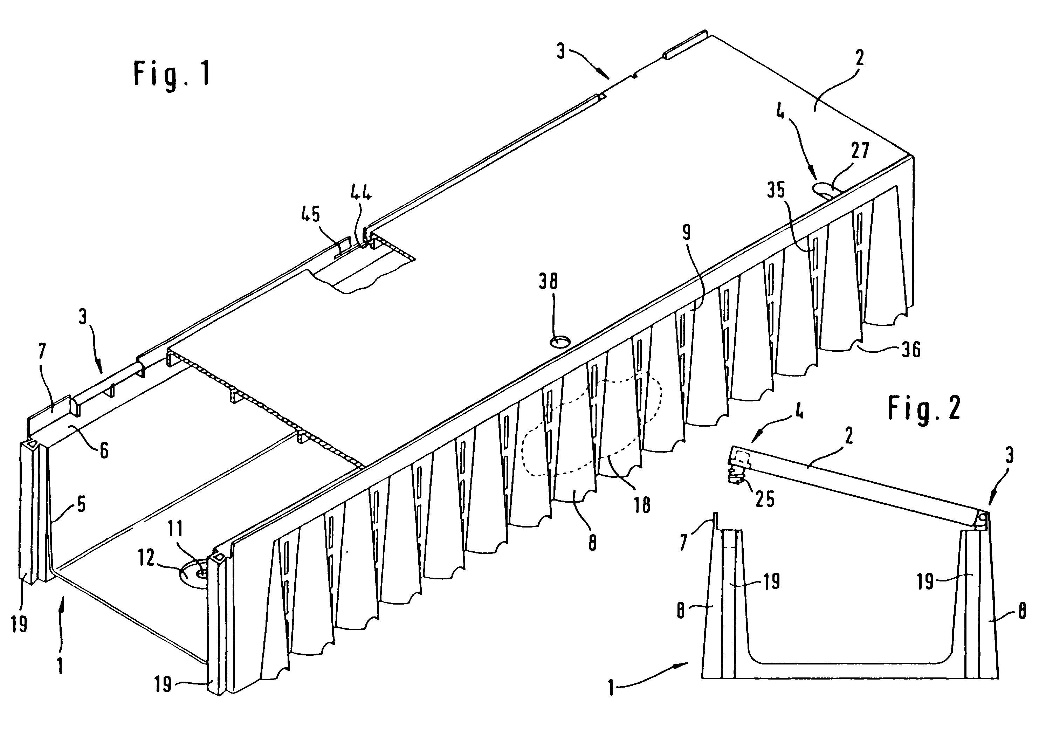

Das perspektivisch in Fig. 1 dargestellte Kabelkanalelement besteht aus einem U-förmigen einerdbaren Kabelkanalelement 1 mit einem aufklappbaren Deckel 2. Das gesamte aus U-förmigem Kabelkanalelement 1 und Deckel 2 bestehende Kabelkanalelement ist aus Kunststoff gefertigt. Aufklappbar ist der Dekkel in Scharnieren 3, die sich am oberen Rand einer der beiden Seitenwände des Kabelkanalelementes 1 befinden. Im Bereich der gegenüberliegenden Seitenwand des Kabelkanalelementes 1 ist der Deckel 2 über Verschlußmittel 4 gegenüber dem Kabelkanalelement 1 verriegelt.

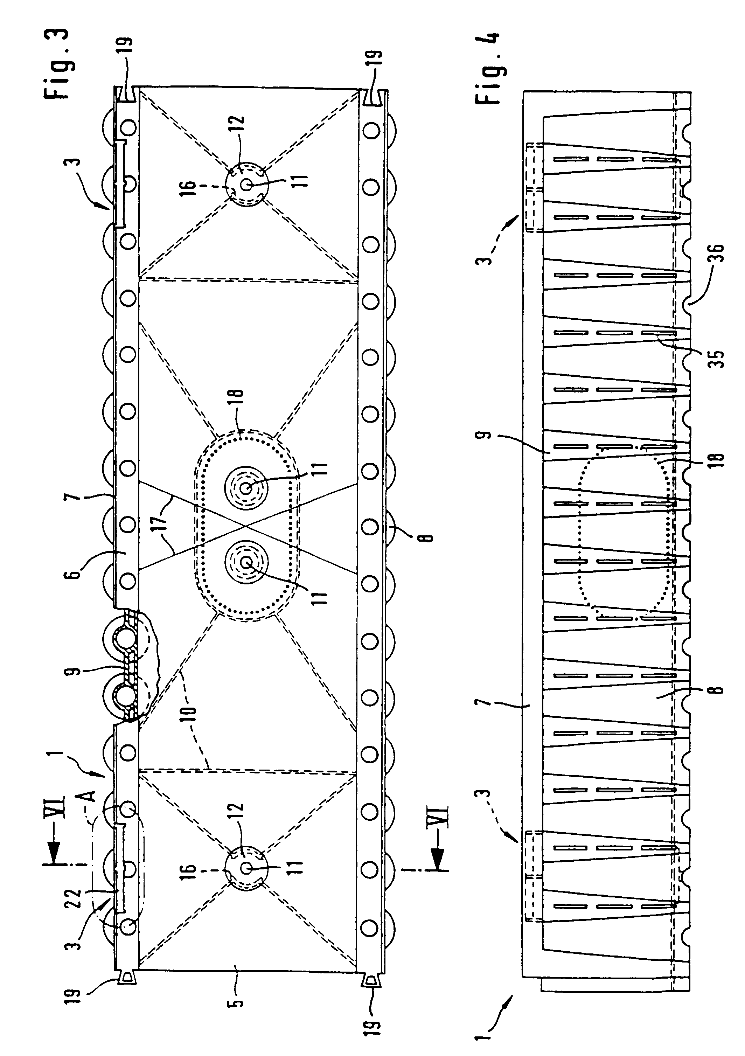

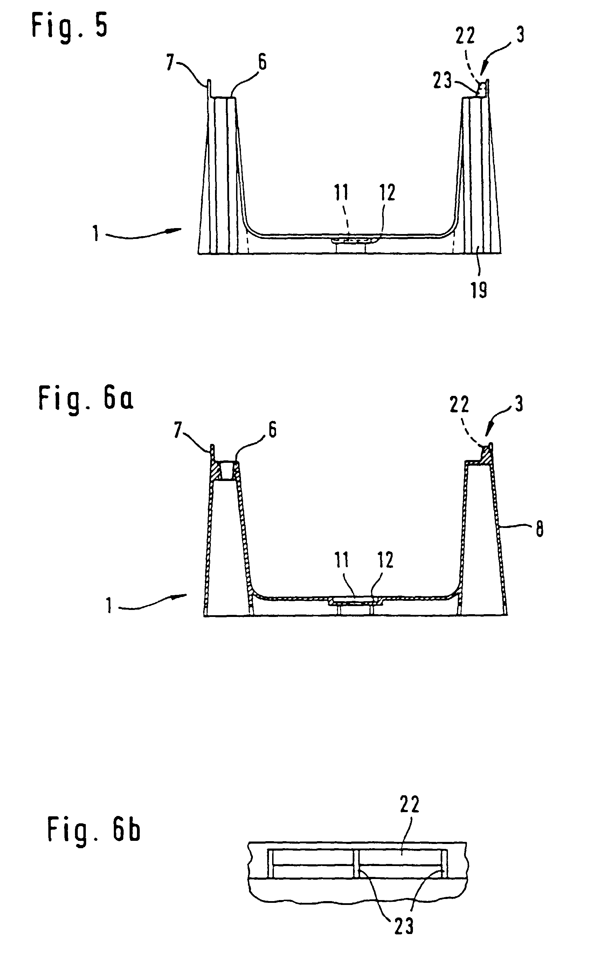

Der genaue Aufbau des Kabelkanalelementes 1 wird nachfolgend anhand der Darstellung in den Fig. 3 bis 6b beschrieben.

Das Grundelement des Kabelkanalelementes 1 ist eine dünnwandige U-profilartig geformte Rinne 5. An dem jeweiligen oberen Ende der Seitenwände der Rinne 5 sind nach horizontal außen angeformte Auflage-Stege 6 angeformt. Die Auflage-Stege 6 dienen zur Aufnahme des Kabelkanal-Deckels 2. Damit ein aufliegender Deckel 2 an seinen Längsseiten gegenüber dem Erdreich, in das das Kabelkanalelement 1 eingesetzt ist, gekammert ist, ragen von den Auflagestegen 6 außen nach oben Schutz-Stege 7 ab.

Die Seitenwände des Kabelkanalelementes 1 sind außen durch vertikal verlaufende angeformte Röhren 8 versteift. Diese Röhren 8 sind an ihrem oberen Ende fest mit dem jeweils zugeordneten Auflage-Steg 6 verbunden. An ihrem unteren Ende ragen sie über die Bodenwand der Rinne 6 hinaus. Die Röhren 8 verlaufen von oben nach unten sich konisch erweiternd. Durch diese Röhren 8 erhält das Kabelkanalelement 1 eine hohe Steifigkeit und zwar insbesondere eine hohe Verwindungssteifigkeit. Diese Steifigkeit wird noch erhöht durch die einzelnen Röhren 8 miteinander verbindende Stege in Form von Zwischenwänden 9. Diese Zwischenwände 9 verlaufen mit parallelem Abstand zu den Seitenwänden der Rinne 5. Durch diese beabstandete Anordnung der Zwischenwände 9 besteht jeweils ein Hohlraum zwischen diesen Wänden und der Seitenwand der Rinne 5, jeweils seitlich verschlossen durch angrenzende Röhren 8.

Die konische Form der Röhren 8 besitzt den Vorteil, daß ein eingeerdetes Kabelkanalelement mit Bezug auf ein Verschieben nach oben hinterschnittartig durch Erdreich gesichert ist. Dadurch erhält ein derart ausgebildetes Kabelkanalelement 1 in eingeerdetem Zustand einen äußerst guten und festen Halt innerhalb des Erdreiches.

Unterhalb des Bodens der Rinne 5 sind Querrippen 10 vorgesehen, die teils senkrecht zur Längserstreckung eines Kabelkanalelementes 1 und teils geneigt zu dieser Längsrichtung verlaufen. Angebunden sind die Enden dieser Querrippen 10 jeweils an den vertikal über den Boden der Rinne 5 hinausragenden Enden der Röhren 8. Durch diese Verrippung wird die Steifigkeit des Kabelkanalelementes 1 insgesamt nochmals erheblich erhöht.

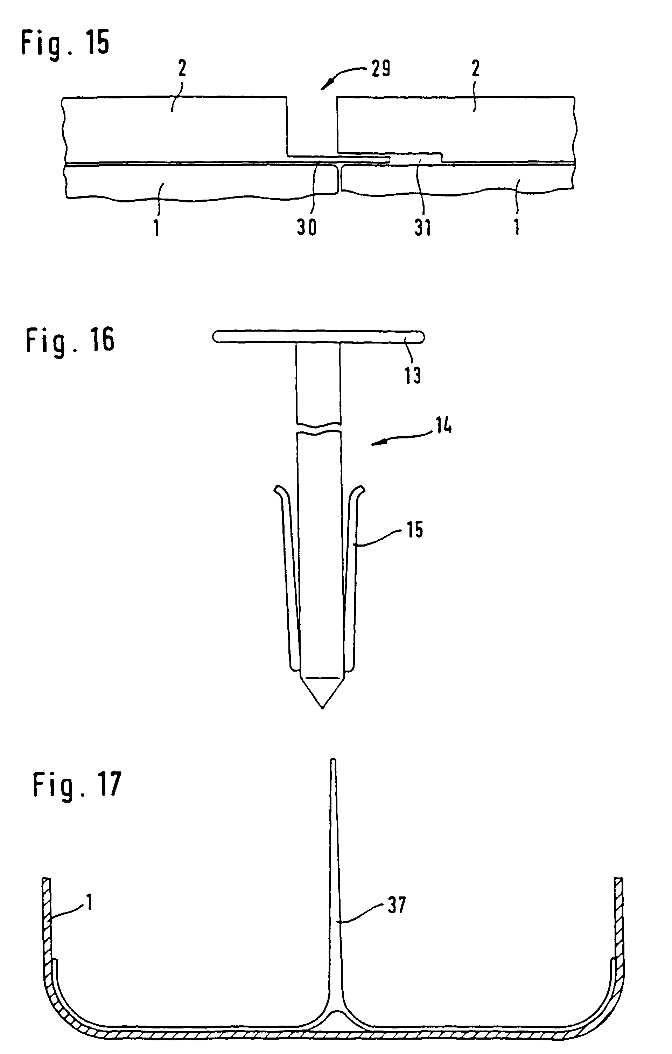

In dem Boden des Kabelkanalelementes 1 sind in Längserstrekkung verteilt Öffnungen 11 zum Einbringen von Verankerungsnägeln in das Erdreich vorgesehen. Im Inneren des Kabelkanalelementes 1 münden diese Öffnungen 11 in ringförmige Einsenkungen 12. Diese Einsenkungen 12 dienen zur Aufnahme eines scheibenförmig ausgebildeten Kopfes 13 eines Erdnagels 14 (Fig. 16). An dem Fuß des Erdnagels 14 sind elastisch abstehende Widerhaken 15 in der Form angeschweißter Stahl-Stege vorgesehen. Durch diese Widerhaken 15 ist ein durch die Öffnung 11 des Kabelkanalelementes 1 in das Erdreich eingesetzter Erdnagel 14 gegen ein ungewolltes Herausschieben aus dem Erdreich sehr wirksam gesichert. Eine solche Sicherung gewährleistet damit einen festen Halt eines Kabelkanalelementes in dem Erdreich und zwar noch zusätzlich durch die Sicherung, die bereits durch die konische Form der Röhren 8 erreicht wird.

Auf der Unterseite des Bodens des Kabelkanalelementes 1 sind um die Öffnungen 11 herum ringförmige Versteifungsrippen 16 angeformt. Diese Ringrippen 16 sind wiederum in die Querrippen 10 eingebunden. In dem Bereich der Öffnungen 11 verlaufen die Querrippen 10 sternförmig nach außen mit der Öffnung 11 im Zentrum. Die Öffnungen 11 sind bevorzugt an den beiden Endbereichen des Kabelkanalelementes 1 vorgesehen. Darüber hinaus sind auch in der Längsmitte noch zwei eng zur Längsmitte benachbart liegende Öffnungen 11 vorgesehen.

Durch den Längsmittelpunkt des Kabelkanalelementes 1 sind zwei quer verlaufende Markierungslinien 17 angebracht. Gegenüber der Querrichtung besitzen diese Markierungslinien jeweils einen Winkel von 22,5°. An diesen Markierungslinien 17 kann ein Kabelkanalelement 1 aufgetrennt werden, um ein angrenzendes Kabelkanalelement 1 unter 45° ansetzen zu können. Derartige Abwinklungen sind in der Praxis notwendig, um beispielsweise bei einem längeren Kabelkanal Hindernisse umgehen zu können. Die im Bereich der Längsmitte vorgesehenen Öffnungen 11 dienen dazu, bei einem an einer Markierungslinie 17 aufgetrennten Kabelkanalelement einen Erdnagel 14 aufnehmen zu können. Durch eine solche Sicherung durch Erdnägel 14 ist ein sicheres Aneinanderliegen angrenzender abgewinkelter Kabelkanäle erreichbar.

Im Boden und in den Seitenwänden des Kabelkanalelementes 1 können Auftrennbereiche durch geschwächte Verbindungsbereiche vorgesehen sein. Die geschwächten Verbindungsbereiche können perforierte linienförmige Bereiche 18 sein.

Um einzelne Kabelkanalelemente 1 in Längsrichtung sicher und fest aneinanderfügen zu können, erfolgt die Verbindung über Schwalbenschwanz-Verschlußmittel 19. Diese Mittel sind an jedem der beiden Enden komplementär zueinander geformt, so daß diese Mittel bei aneinanderliegenden Kabelkanalelementen formschlüssig ineinanderschiebbar sind.

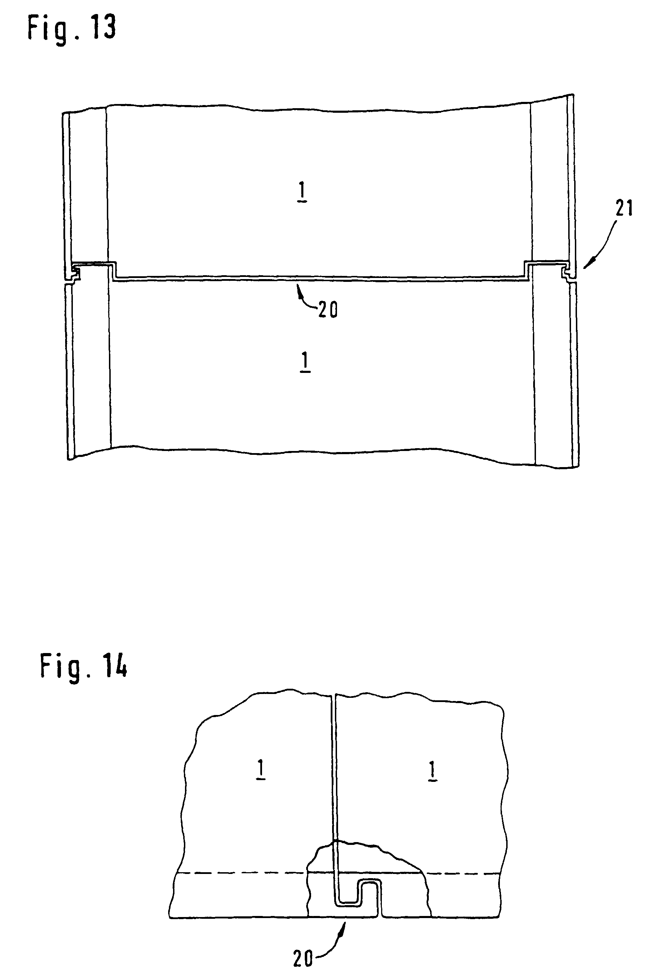

Um auch im Bodenbereich der Kabelkanalelemente 1 eine sichere Verankerung aneinandergrenzender Elemente zu erhalten, können dort Verkrallmittel 20 (Fig. 13, 14) in der Form ineinandergreifender Stege vorgesehen sein. Diese Verkrallmittel 20 können auch in nicht gezeichneter Ausführung einfache komplementär geformte Überlappungsbereiche sein in einer Art wie sie weiter unten mit Bezug auf den Deckel 2 als Überlappungsbereiche 20 näher beschrieben und in Fig. 15 dargestellt sind.

Anstelle eines Schwalbenschwanz-Verschlusses 19 kann auch ein Schnappverschluß 21 an den Seitenwänden realisiert werden. Ist ein solcher Schnappverschluß 21 durch entsprechende Mittel möglich, so werden aneinandergrenzende Kabelkanalelemente 1 in einer höhenmäßig gegeneinander verschobenen Stellung ineinandergeschnappt und danach auf gleiche Höhe geschoben, wodurch vorhandene Verkrallmittel 20 im Bodenbereich in gegenseitigen Eingriff gebracht werden.

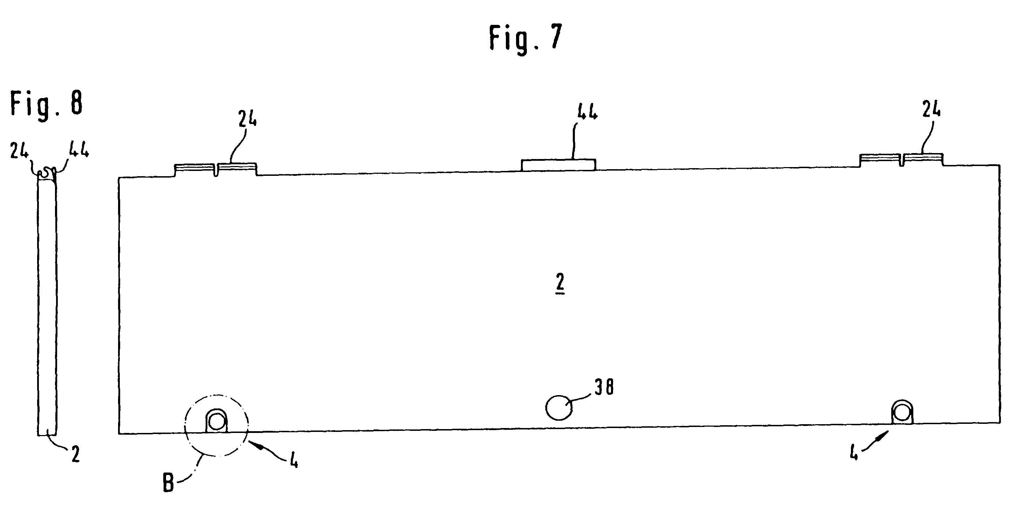

Bezüglich des Deckels 2 und dessen Anbindung an dem Kabelkanalelement 1 wird insbesondere Bezug genommen auf die Fig. 7, 8, 9, 10, 11 und 12.

Die Scharniere 3, in denen der Deckel 2 schwenkbar ist, bestehen aus jeweils einem Bolzen 22, der über Stege 23 mit dem oberen Rand einer Seitenwand des Kabelkanalelementes 1 verbunden ist. An diesen Bolzen 22 greifen jeweils an den Deckel 2 angeformte federnde Klauen 24 an. Die Klauenöffnung ist, wie aus Fig. 8 zu ersehen ist, so gelegt, daß ein verbindendes oder lösendes Verrasten einer Klaue 24 an einem Bolzen 22 ausschließlich in einer geöffneten Deckelposition möglich ist. Hierdurch wird verhindert, daß bei einem geschlossenen Deckel 2 die Scharnierverbindung durch ein Ausrasten möglich ist. Dies ist für einen sicheren Verschluß des Kabelkanalelementes 1 durch einen aufgebrachten und verriegelten Deckel 2 wichtig. Zur Verhinderung eines Aushebens eines geschlossenen Deckels 2 ist dieser in der Seitenwand des Kabelkanalelementes 1 zwischen den Scharnieren 3 durch mindestens eine an den benachbarten Seiten des Deckels 2 und der angrenzenden Seitenwand des Kabelkanalelementes 1 vorgesehene Nut- und Federverbindung gesichert. Die mindestens eine Nut- und Federverbindung besteht beispielsweise aus einer Lasche 44 an dem Deckel 2 und einer komplementären Ausnehmung 45 in dem oberen Seitenwandbereich (Schutz-Steg 7) des Kabelkanalelementes 1.

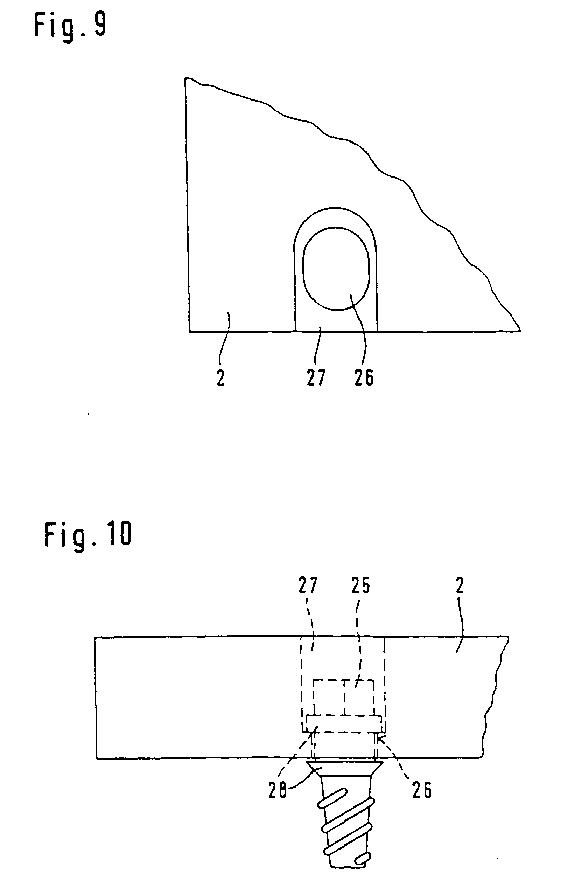

Als Verriegelungselemente für den Deckel 2 dienen Grob-Gewindekopfschrauben 25, die in Öffnungen 26 des Deckels 2 eingesetzt sind und in Gegengewinde in dem Kabelkanalelement 1 einschraubbar sind. Der Kopf einer solchen Gewindekopfschraube 25 lagert dabei jeweils in einer Einsenkung 27 des Deckels (Fig. 9, 10). Der Kopf hat zweckmäßigerweise ein spezielles Ansatzprofil für ein Werkzeug, so daß eine Betätigung der Gewindekopfschraube 25 lediglich mit einem hierauf abgestellten, speziell geformten Werkzeug möglich ist. Die Gewindekopfschraube 25 ist vorteilhafterweise ebenso wie alle anderen Teile des Kabelkanalelementes 1 aus Kunststoff. Insbesondere besitzen die Gewindekopfschrauben 25 jeweils ein Stegpaar 28, mit dessen Hilfe sie in dem Rand einer Öffnung 26 unverlierbar einschnappbar sind. Hierzu ist es lediglich erforderlich, daß der dem Gewinde benachbarte Steg als verformbarer Widerhakensteg ausgeführt ist.

Damit der Deckel 2 bei einer gegenüber dem U-förmigen Kabelkanalelement 1 stärkeren Ausdehnung, wie sie durch Sonnenbestrahlung bewirkt werden kann, zwischen den Seitenwänden des Kabelkanalelementes 1 nicht in unzulässiger Weise verklemmt werden kann, sind die Öffnungen 26 in Querrichtung des Kabelkanalelementes als Langlöcher ausgebildet.

In noch stärkerem Maße als in Querrichtung können sich die Deckel 2 gegenüber den zugeordneten Kabelkanalelementen 1 in Längsrichtung ausdehnen. Um in dieser Richtung ein Verklemmen, das im Extremfall zu einem Herausspringen des Deckels 2 aus seiner Verankerung führen kann, sicher zu vermeiden, können die Deckel eine gegenüber dem Kabelkanalelement kürzere Länge aufweisen. Durch eine derart kürzere Länge des Deckels entstehen allerdings offene Schlitze zum Inneren des Kabelkanalelementes hin. Um dies zu vermeiden, können die Deckel 2 an ihren stirnseitigen Enden mit Überlappungs-Verschlußmitteln 29 ausgestattet sein. Diese Überlappungs-Verschlußmittel 29 sind an den beiden Enden komplementär geformt auszubilden, um jeweils mit gleichen Deckeln 2 beidseitige Überlappungsverschlüsse erreichen zu können. Sind die Deckel 2 mit derartigen Überlappungs-Verschlußmitteln versehen, die jeweils an einem Ende eine herausragende Zunge 30 und an dem anderen Ende eine zur Aufnahme dieser Zunge 30 komplementär geformte Ausnehmung 31 umfassen, versehen, kann ohne besondere Maßnahmen kein Deckel 2 aus einem Kabelkanalelemente-Verbund einzeln herausgenommen werden. Denn hieran hindert jeweils eine Zunge 30 eines Überlappungs-Verschlusses 29. Abhilfe läßt sich hier allerdings dadurch schaffen, daß die Deckel bei geöffneter Verriegelung (Gewindekopfschraube 25) in den Scharnieren 3 soweit verschiebbar ist, daß die betreffende Zunge 30 des Deckels 2 für ein Öffnen des Deckels aus der komplementären Ausnehmung 31 des Nachbardeckels herausgeschoben werden kann.

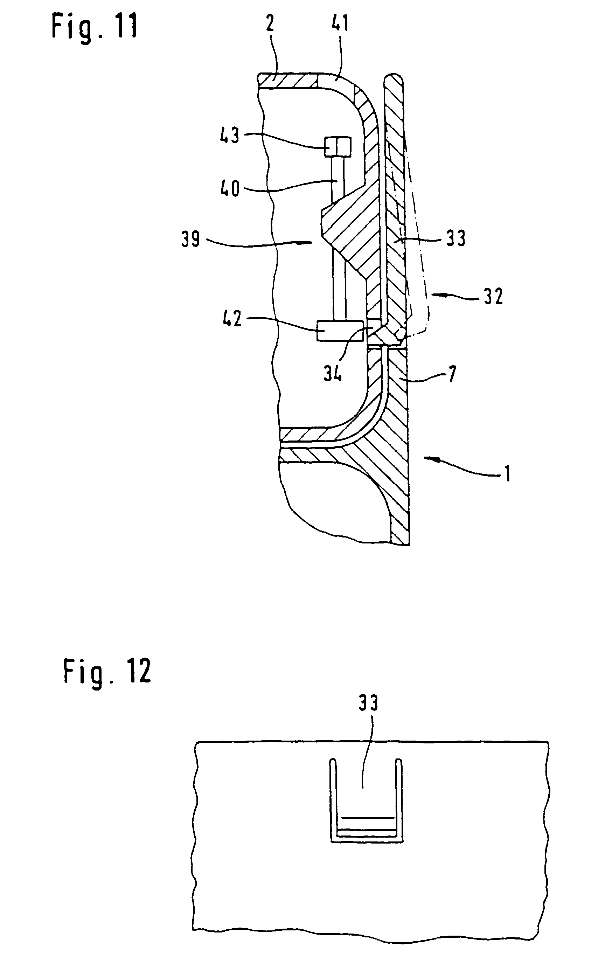

Eine gegenüber dem Einsatz einer Gewindekopfschraube 25 alternative Art einer Deckelverriegelung zeigen die Fig. 11 und 12. Hier erfolgt die Verriegelung über einen Schnappverschluß 32. Dieser setzt sich zusammen aus einer in einen der Schutz-Stege 7 eingeformten elastisch bewegbaren Zunge 33, die in eine Öffnung 34 des Deckelrandes eingreift. Im entlasteten Zustand nimmt die Zunge 33 eine Position ein, durch die der Deckel 2 gegen ein Öffnen in dem Kabelkanalelement 1 verriegelt ist. Zum Öffnen des Schnappverschlusses 32 dient folgende Einrichtung 39.

Ein zylindrischer Stab 40 ist drehbar im Inneren des Deckels 2 gelagert und über ein durch eine Öffnung 41 in einem von außen oben zugänglichen Bereich des Deckels 2 mit Hilfe eines aufsetzbaren Werkzeuges verdrehbar. An dem Stab 40 ist ein Mitnehmer 42 angeformt, der durch Verdrehen des Stabes 40 in die Öffnung 34 zum Herausdrücken der Zunge 32 des Schnappverschlusses einführbar ist. Zu diesem Zweck besitzt der Mitnehmer in einer Ansicht in Richtung der Drehachse des Stabes 40 eine etwa ovale Außenkontur. Damit kann. der Schnappverschluß 32 durch ein von außen in den Deckel 2 eingeführtes Werkzeug geöffnet werden. Der Ansatzbereich 43 des Stabes 40 für das anzusetzende Werkzeug kann so ausgeführt sein, daß ein Spezialwerkzeug zum Betätigen notwendig ist, wodurch ein unbefugtes Öffnen des Deckels 2 verhindert beziehungsweise erheblich erschwert wird.

Für eine bei den Kabelkanalelementen 1 gewünschte Drainage längs der Seitenwände und an dem Unterboden für abzuführendes dort anstehendes Wasser sind bei der erfindungsgemäßen Ausführung keine zusätzlich an dem Kabelkanalelement anzubringenden Drainagemittel erforderlich. Es reicht vielmehr aus, die Zwischenwände 9 und/oder die Röhren 8 zu perforiert oder mit beispielsweise dünnen Schlitzen 35 versehen sind. Innerhalb der Hohlräume, die unterhalb der Perforation bzw. den Schlitzen liegen, kann an den Seitenwänden anstehendes Wasser problemlos drainagewirksam abfließen. Dabei ist auch unterhalb des Bodens des Kabelkanalelementes ein gutes Umströmen möglich, da dort infolge des verrippten Bodens ausreichend natürliche Strömungswege in dem Erdreich vorhanden sind. Die Perforation bzw. die Größe der Schlitze 35 ist derart zu wählen, daß gerade noch kein Erdreich diese Öffnungen durchdringen kann.

Für ein Abfließen von Stauwasser an den Seitenwänden eines Kabelkanalelementes 1 reichen im Grunde bereits in den unteren Bereichen der Röhren 8 und/oder der Zwischenwände 9 angebrachte Ausnehmungen 36 aus.

Um in dem Inneren eines Kabelkanalelementes 1 voneinander getrennte Längsabschnitte für gewünschte getrennte Kabelführungen zu erhalten, wird lediglich ein Innenraumteiler 37 eingesetzt. Dieser stützt sich in seinem unteren Bereich formschlüssig an den Seitenwänden des Kabelkanalelementes ab. Die Innenraumteiler 37 können verschiedenartig geformt sein, so daß beliebige Raumaufteilungen auf einfache Weise erzielbar sind.

Zum Aufklappen des Deckels 2 ist in diesem an seiner den Scharnieren 3 gegenüberliegenden Längsseite ein Griffloch 38 vorgesehen.

## Patentansprüche

1. U-förmiges, einerdbares und begehbares Kabelkanalelement (1), insbesondere aus Kunststoff sowie insbesondere zur Verlegung an Bahngleisen, mit an den oberen von den U-Schenkeln gebildeten Seitenwandenden horizontal nach außen auskragenden Auflagestegen (6) und mit die Seitenwände außen versteifenden, vertikal verlaufenden, mit den Auflagestegen (6) verbundenen Versteifungsmitteln, das in geschlossenem Zustand mit einem die Seitenwände kontaktierenden Deckel (2) verschließbar ist,
**dadurch gekennzeichnet**,
daß die Versteifungsmittel in die Seitenwände eingeformte, voneinander beabstandete und miteinander verrippte Röhren (8) sind.

2. Kabelkanalelement nach Anspruch 1,.
**dadurch gekennzeichnet**,
daß die Röhren (8) sich von oben nach unten etwa konisch erweitern.

3. Kabelkanalelement nach Anspruch 1 oder 2,
**dadurch gekennzeichnet**,
daß die Röhren (8) durch parallel zu den von den U-Schenkeln gebildeten Seitenwänden mit Abstand verlaufenden Zwischenwänden (9) miteinander verrippt sind.

4. Kabelkanalelement nach einem der vorhergehenden Ansprüche,
**dadurch gekennzeichnet**,
daß die Röhren (8) den Boden des Kabelkanalelementes nach unten überragen.

5. Kabelkanalelement nach einem der vorhergehenden Ansprüche,
**dadurch gekennzeichnet**,
daß die Röhren (8) und/oder Zwischenwände (9) mit siebförmig wirkenden Ausnehmungen für eine Seitenwanddrainage versehen sind.

6. Kabelkanalelement nach einem der vorhergehenden Ansprüche,
**dadurch gekennzeichnet,**
daß die Röhren (8) und/oder Zwischenwände (9) an ihren unteren Enden Ausnehmungen (36) für eine unter dem Boden des Kabelkanalelementes in dessen Querrichtung mögliche Drainage besitzen.

7. Kabelkanalelement nach einem der vorhergehenden Ansprüche,
**dadurch gekennzeichnet**,
daß die Unterseite des Kabelkanalelementes mit angeformten, mit den übersteheden Enden der Röhren (8) verbundenen Querrippen (10) versehen sind.

8. Kabelkanalelement nach Anspruch 7,
**dadurch gekennzeichnet**,
daß von den Querrippen (10) mit Bezug auf die Kabelkanal-Längsrichtung ein Teil senkrecht und ein anderer Teil geneigt verläuft.

9. Kabelkanalelement nach einem der vorhergehenden Ansprüche,
**dadurch gekennzeichnet**,
daß in dem Boden des Kabelkanalelementes Öffnungen (11) zum Einführen von Erdverankerungsmitteln (14) vorgesehen sind und daß von diesen ausgehend auf der Bodenunterseite Querrippen (10) sternförmig zu den Seitenwandbereichen hin verlaufen.

10. Kabelkanalelement nach einem der vorhergehenden Ansprüche,
**dadurch gekennzeichnet**,
daß die Öffnungen (11) an der Bodenoberseite in ringförmige Einsenkungen (12) einmünden, in denen sich eingeführte Erdverankerungsmittel (14) abstützen könne.

11. Kabelkanalelement nach einem der vorhergehenden Ansprüche,
**dadurch gekennzeichnet**,
daß der Boden des Kabelkanalelementes längs geschwächten Verbindungsstreifen (18) heraustrennbare Abschnitte enthält, wobei der die heraustrennbaren Abschnitte umfassende Randbereich des Bodens durch eine jeweils umlaufende an der Bodenunterseite angebrachte, mit den Querrippen (10) verbundene Umlauf-Rippe versteift ist.

12. Kabelkanalelement (1) nach einem der vorhergehenden Ansprüche, bei dem der Deckel (2) mit dem dieses verschließbar ist, aufklappbar in Scharnieren (3) gelagert ist, die sich am oberen Rand einer der beiden Seitenwände befinden und aus jeweils zwei miteinander verrasteten Teilen bestehen, von denen jeweils eines eine federnde Klaue (24) und das andere ein von dieser umgriffener Bolzen (22) ist,
**dadurch gekennzeichnet**,
daß die Bolzen (22) an einer der Seitenwände des Kabelkanalelementes und die Klauen (24) an dem Deckel (2) angebracht sind und daß durch die Lage der Öffnung der Klauen (24) der Deckel (2) ausschließlich in geöffneter Stellung ein- und ausrastbar ist.

13. Kabelkanalelement nach Anspruch 12, bei dem für den Dekkel (2) Verschlußmittel vorgesehen sind, die an der der Scharnierseite des Kabelkanalelementes (1) gegenüberliegenden Wandseite vorgesehen sind,
**dadurch gekennzeichnet**,
daß die Verschlußmittel Gewindekopfschrauben (25) sind, die in dem Deckel (2) vorgesehene Durchgangsöffnungen (26) durchgreifen und sich dort jeweils mit ihrem Kopf drehbar abstützen und mit ihren Gewindeenden in komplementär geformte Gewindebereiche der zugehörigen Seitenwand des Kabelkanalelementes einschraubbar sind.

14. Kabelkanalelement nach Anspruch 13,
**dadurch gekennzeichnet**,
daß die Durchgangs-Öffnungen (26) zur Aufnahme der Gewindekopfschrauben (25) in Kabelkanalquerrichtung verlaufende Langlöcher sind.

15. Kabelkanalelement (1) nach Anspruch 12, bei dem für den Deckel (2) Verschlußmittel vorgesehen sind, die an der der Scharnierseite des Kabelkanalelementes (1) gegenüberliegenden Wandseite vorgesehen sind,
**dadurch gekennzeichnet,**
daß die Verschlußmittel Schnappverschlußmittel (32) sind mit einer durch elastische Verformung beweglichen Zunge (33) an einem der beiden Teile und einem Widerlager (34) an dem anderen der beiden Teile.

16. Kabelkanalelement nach Anspruch 15,
**dadurch gekennzeichnet**,
daß die Widerlager (34) Öffnungen sind.

17. Kabelkanalelement nach einem der vorhergehenden Ansprüche
**dadurch gekennzeichnet**,
daß die stirnseitigen Enden der Seitenwände mit komplementär geformten Schwalbenschwanz-Verschlußmitteln (19 ) ausgerüstet sind.

18. Kabelkanalelement nach einem der vorhergehenden Ansprüche,
**dadurch gekennzeichnet**,
daß der Boden des Kabelkanalelementes an seinen Enden mit komplementär geformten Verkrallmitteln (20) zur in diesem Bereich verkrallten Bodenverbindung aneinandergrenzender Kabelkanalelemente versehen ist, wobei diese Verkrallmittel (20) vertikal ineinanderschiebbar sind.

19. Kabelkanalelement nach einem der vorhergehenden Ansprüche,
**dadurch gekennzeichnet**,
daß die Verkrallmittel (20) aus einer quer zur Kanallängsrichtung verlaufenden Rille an einem Ende und aus einem komplementär geformten gleichfalls quer verlaufenden Steg an dem anderen Ende bestehen.

20. Kabelkanalelement nach einem der vorhergehenden Ansprüche,
**dadurch gekennzeichnet**,
daß die stirnseitigen Enden der Seitenwände mit komplementär ausgebildeten Verrast- bzw. Schnappverschlußmitteln (21) ausgebildet sind.

21. Kabelkanalelement nach einem der vorhergehenden Ansprüche,
**dadurch gekennzeichnet**,
daß der Deckel (2) an seinen Enden für ein überlappendes Aneinanderliegen zweier Deckel komplementär geformte Überlappungs-Verschlußmittel (29) besitzt.

22. Kabelkanalelement nach einem der vorhergehenden Ansprüche,
**dadurch gekennzeichnet**,
daß zum Verankern in dem Erdreich in die in dem Boden vorgesehenen Öffnungen (11) Verankerungsnägel (14) eingesetzt sind, deren Kopf jeweils als Scheibe ausgebildet ist und an deren jeweils freien Ende federnde Widerhaken (15) angebracht sind.

23. Kabelkanalelement nach einem der vorhergehenden Ansprüche,
**dadurch gekennzeichnet**
daß ein Innenraumteiler (37) für getrennte, in Kanallängsrichtung parallel nebeneinanderliegende Kabelaufnahmeräume lose in Kanalquerrichtung einsetzbar ist, wobei dieser Innenraumteiler (37) zumindest in seinem unteren Bereich formschlüssig auf den inneren Abstand der Seitenwände abgestimmt ist.

24. Kabelkanalelement nach einem der vorhergehenden Ansprüche,
**dadurch gekennzeichnet**
daß in Längsmitte des Kabelkanalelementes in dessen Boden eng benachbart zu jeder Seite dieser Längsmitte Öffnungen (11) für Verankerungsmittel (14) vorgesehen sind.

25. Kabelkanalelement nach einem der vorhergehenden Ansprüche,
**dadurch gekennzeichnet**
daß das Kabelkanalelement (1) im Bereich der Enden seines Bodens für ein überlappendes Auseinanderliegen zweier Kabelkanalelemente komplementär geformte Überlappungsbereiche besitzt.

26. Kabelkanalelement nach Anspruch 12,
**dadurch gekennzeichnet**
daß zwischen zwei Scharnieren (3) mindestens ein in der Klappachse liegender Bereich vorgesehen ist, in dem bei geschlossenem Deckel (2) eine den Deckel (2) gegen Abheben sichernde Nut- und Feder-Verbindung (44, 45) zwischen Deckel (2) und angrenzender Seitenwand des Kabelkanals (1) vorgesehen ist.

## Claims

1. U-shaped, accessible cable duct element (1) which can be buried, in particular of a plastics material and in particular for installing at railway tracks, with support webs (6), which protrude horizontally outwards at the upper side wall ends formed by the U-limbs, and with vertically extending reinforcement means which externally reinforce the side walls, are connected to the support webs (6) and can be closed off in the closed state by a cover (2) contacting the side walls,
**characterised in**
that the reinforcement means are tubes (8) which are moulded into the side walls, spaced apart and ribbed together.

2. Cable duct element according to Claim 1,
**characterised in**
that the tubes (8) widen conically slightly from the top downwards.

3. Cable duct element according to Claim 1 or 2,
**characterised in**
that the tubes (8) are ribbed together by partition walls (9) extending at a spacing parallel to the side walls formed by the U-limbs.

4. Cable duct element according to any one of the preceding Claims,
**characterised in**
that the tubes (8) project downwards beyond the bottom of the cable duct element.

5. Cable duct element according to any one of the preceding Claims,
**characterised in**
that the tubes (8) and/or partition walls (9) are provided with recesses acting like sieves for side wall drainage.

6. Cable duct element according to any one of the preceding Claims,
**characterised in**
that the tubes (8) and/or partition walls (9) have at their lower ends recesses (36) for drainage which can take place below the bottom of the cable duct element in the transverse direction thereof.

7. Cable duct element according to any one of the preceding Claims,
**characterised in**
that the underside of the cable duct element is provided with transverse ribs (10) which are moulded on and connected to the projecting ends of the tubes (8).

8. Cable duct element according to Claim 7,
**characterised in**
that some of the transverse ribs (10) extend perpendicularly and some extend at an inclination relative to the longitudinal direction of the cable duct.

9. Cable duct element according to any one of the preceding Claims,
**characterised in**
that openings (11) for inserting ground anchorage means (14) are provided in the bottom of the cable duct element, and that transverse ribs (10) extend in star-shaped fashion from the latter at the underside of the bottom towards the side wall regions.

10. Cable duct element according to any one of the preceding Claims,
**characterised in**
that the openings (11) lead into annular depressions (12) at the top side of the bottom, in which depressions inserted ground anchorage means (14) can be supported.

11. Cable duct element according to any one of the preceding Claims,
**characterised in**
that the bottom of the cable duct element includes portions which can be separated along weakened connecting strips (18), wherein the edge region of the bottom which comprises the separable portions is reinforced by a respective circulating rib which is fitted to the underside of the bottom and connected to the transverse ribs (10).

12. Cable duct element (1) according to any one of the preceding Claims, in which the cover (2), with which this element can be closed off, is mounted in hinges (3) so that it can swing open, which hinges are located at the upper edge of one of the two side walls and consist of two respective parts which can be interlocked, one of which parts is a resilient catch (24) and the other of which is a pin (22) embraced by the latter,
**characterised in**
that the pins (22) are fitted to one of the side walls of the cable duct element and the catches (24) are fitted to the cover (2), and that the cover (2) can only be engaged and disengaged in the open position through the position of the opening of the catches (24).

13. Cable duct element according to Claim 12, in which closure means are provided for the cover (2), which means are provided at the wall side lying opposite the hinge side,
**characterised in**
that the closure means are threaded head screws (25), which pass through through-openings (26) provided in the cover (2), where they are in each case rotatably supported by way of their head and can be screwed by way of their threaded ends into threaded regions, which are shaped in complementary fashion, of the associated side wall of the cable duct element.

14. Cable duct element according to Claim 13,
**characterised in**
that the through-openings (26) are oblong holes extending in the transverse direction of the cable duct to accommodate the threaded head screws (25).

15. Cable duct element (1) according to Claim 12, in which closure means are provided for the cover (2), which means are provided at the wall side lying opposite the hinge side of the cable duct element (1),
**characterised in**
that the closure means are snap-action closure means (32) with a tongue (33), which can move through elastic deformation, at one of the two parts and an abutment (34) at the other of the two parts.

16. Cable duct element according to Claim 15,
**characterised in**
that the abutments (34) are openings.

17. Cable duct element according to any one of the preceding Claims,
**characterised in** that the front ends of the side walls are equipped with dovetail closure means (19), which are shaped in complementary fashion.

18. Cable duct element according to any one of the preceding Claims,
**characterised in** that the bottom of the cable duct element is provided at its ends with claw means (20), which are shaped in complementary fashion, for the bottom connection, which has claws in this region, of adjacent cable duct elements, wherein these claw means (20) can be pushed vertically into one another.

19. Cable duct element according to any one of the preceding Claims,
**characterised in** that the claw means (20) consist of a channel extending transversely to the longitudinal direction of the duct at one end and of a web which is shaped in complementary fashion and also extends transversely at the other end.

20. Cable duct element according to any one of the preceding Claims,
**characterised in** that the front ends of the side walls are formed with interlocking or snap-action closure means (21) formed in a complementary fashion.

21. Cable duct element according to any one of the preceding Claims,
**characterised in** that, at its ends, the cover (2) has overlap closure means (29), which are shaped in complementary fashion, for joining two covers in overlapping fashion.

22. Cable duct element according to any one of the preceding Claims,
**characterised in**
that anchor nails (14) are inserted in the openings (11) provided in the bottom for anchorage in the ground, the head of which nails is in each case formed as a disc and to the free end of which a resilient barb (15) is in each case fitted.

23. Cable duct element according to any one of the preceding Claims,
**characterised in**
that an interior divider (37) for separate cable compartments lying parallel side by side in the longitudinal direction of the duct can be loosely inserted in the transverse direction of the duct, wherein this interior divider (37) is adapted for a form fit to the inner spacing of the side walls at least in its bottom region.

24. Cable duct element according to any one of the preceding Claims,
**characterised in**
that openings (11) for ground anchorage means (14) are provided in the longitudinal centre of the cable duct element in the bottom thereof and closely adjacent to each side of this longitudinal centre.

25. Cable duct element according to any one of the preceding Claims,
**characterised in**
that the cable duct element (1) has overlap regions shaped in complementary fashion in the region of the ends of its bottom for separating two cable duct elements in overlapping fashion.

26. Cable duct element according to Claim 12,
**characterised in**
that at least one region lying at the hinge axis is provided between two hinges (3), in which region a tongue-and-groove joint (44, 45), which prevents the cover (2) from lifting up, is provided between the cover (2) and the adjacent side wall of the cable duct (1).

## Revendications

1. Elément de caniveau de câbles (1) en forme de U, enterrable et supportant le passage de personnes, en particulier en matière plastique et destiné en particulier à être posé le long de voies de chemin de fer, comportant à l'extrémité supérieure de ses parois latérales formées par les ailes du U des rebords formant appuis (6) qui font saillie horizontalement en direction de l'extérieur ainsi que des moyens de rigidification qui rigidifient les parois latérales côté extérieur, s'étendent verticalement et sont liés aux rebords formant appuis (6), l'élément de caniveau, à l'état fermé, étant fermé par un couvercle (2) qui relie entre elles les parois latérales, caractérisé en ce que les moyens de rigidification sont des tubes (8) espacés les uns des autres et reliés entre eux par des nervures.

2. Elément de caniveau de câbles selon la revendication 1, caractérisé en ce que les tubes (8) s'évasent sensiblement en forme de cône du haut vers le bas.

3. Elément de caniveau de câbles selon la revendication 1 ou 2, caractérisé en ce que les tubes (8) sont reliés entre eux par des cloisons intermédiaires (9) formant nervures qui s'étendent parallèlement aux parois latérales formées par les ailes du U, à distance de celles-ci.

4. Elément de caniveau de câbles selon une des revendications précédentes, caractérisé en ce que les tubes (8) dépassent vers le bas par rapport au fond de l'élément de caniveau de câbles.

5. Elément de caniveau de câbles selon une des revendications précédentes, caractérisé en ce que les tubes (8) et/ou les cloisons intermédiaires (9) sont pourvus d'évidements formant tamis pour un drainage au niveau des parois latérales.

6. Elément de caniveau de câbles selon une des revendications précédentes, caractérisé en ce que les tubes (8) et/ou les cloisons intermédiaires (9), à leur extrémité inférieure sont munis d'évidements (36) pour un drainage possible sous le fond de l'élément de caniveau de câbles, transversalement à celui-ci.

7. Elément de caniveau de câbles selon une des revendications précédentes, caractérisé en ce que la face inférieure de l'élément de caniveau de câbles est pourvue de nervures transversales (10) venues de moulage, qui sont liées aux extrémités dépassantes des tubes (8).

8. Elément de caniveau de câbles selon la revendication 7, caractérisé en ce que les nervures transversales (10) pour partie sont perpendiculaires à la direction longitudinale de l'élément de caniveau de câbles et pour partie sont inclinées par rapport cette même direction.

9. Elément de caniveau de câbles selon une des revendications précédentes, caractérisé en ce que des ouvertures (11) sont prévues dans le fond de l'élément de caniveau de câbles pour la mise en place de moyens (14) d'ancrage dans le sol et en ce que des nervures transversales (10) s'étendent en étoile à partir de ces ouvertures en direction des zones de paroi latérale, côté face inférieure du fond.

10. Elément de caniveau de câbles selon une des revendications précédentes, caractérisé en ce que les ouvertures (11), côté face supérieure du fond, débouchent dans des chambrages (12) annulaires dans lesquels les moyens (14) d'ancrage insérés peuvent prendre appui.

11. Elément de caniveau de câbles selon une des revendications précédentes, caractérisé en ce que le fond de l'élément de caniveau de câbles comporte des tronçons séparables le long d'une bande de liaison affaiblie, la zone de bord du fond qui comporte les tronçons séparables étant rigidifiée par une nervure périphérique prévue sur la face inférieure du fond et liée aux nervures transversales (10).

12. Elément de caniveau de câbles (1) selon une des revendications précédentes, dans lequel le couvercle (2), au moyen duquel ledit caniveau de câbles peut être fermé, est monté pivotant dans des charnières (3) qui sont disposées sur le bord supérieur de l'une des deux parois latérales et sont formées chaque fois de deux éléments encliquetés l'un avec l'autre, parmi lesquels l'un est une pince (24) élastique et l'autre un axe (22) entouré par cette dernière, caractérisé en ce que les axes (22) sont disposés sur l'une des parois latérales de l'élément de caniveau de câbles et les pinces (24) sont disposées sur le couvercle (2) et en ce que, de par la position de l'ouverture des pinces (24), le couvercle (2) ne peut être encliqueté et détaché de l'élément de caniveau de câbles que dans la position ouverte.

13. Elément de caniveau de câbles selon la revendication 12, dans lequel il est prévu pour le couvercle (2) des moyens de verrouillage qui sont disposés sur la paroi de l'élément de caniveau de câbles (1) en vis-à-vis des charnières, caractérisé en ce que les moyens de verrouillage sont des vis à tête (25) qui traversent des ouvertures de passage (26) prévues dans le couvercle (2), prennent appui sur celui-ci avec leur tête et peuvent être vissés par leur extrémité filetée dans des parties filetées complémentaires de la paroi latérale concernée de l'élément de caniveau de câbles.

14. Elément de caniveau de câbles selon la revendication 13, caractérisé en ce que les ouvertures de passage (26) recevant les vis à tête (25) sont des trous oblongs qui s'étendent dans la direction transversale du caniveau de câbles.

15. Elément de caniveau de câbles selon la revendication 12, dans lequel il est prévu pour le couvercle (2), des moyens de verrouillage qui sont disposés sur la paroi de l'élément de caniveau de câbles (1 ) en vis-à-vis des charnières, caractérisé en ce que les moyens de verrouillage sont des moyens de verrouillage à enclenchement (32) avec une languette (33) qui peut se déplacer par déformation élastique sur l'un des éléments et une butée (34) sur l'autre élément.

16. Elément de caniveau de câbles selon la revendication 15, caractérisé en ce que les butées (34) sont des ouvertures.

17. Elément de caniveau de câbles selon une des revendications précédentes, caractérisé en ce que les extrémités frontales des parois latérales sont pourvues de moyens de verrouillage (19) complémentaires en queue d'aronde.

18. Elément de caniveau de câbles selon une des revendications précédentes, caractérisé en ce que le fond de l'élément de caniveau de câbles, à ses extrémités, est pourvu de moyens d'accrochage (20) complémentaires pour la liaison par accrochage entre des fonds d'éléments de caniveau de câbles voisins, ces moyens d'accrochage (20) pouvant coulisser les uns dans les autres verticalement.

19. Elément de caniveau de câbles selon une des revendications précédentes, caractérisé en ce que les moyens d'accrochage (20) comprennent une rainure qui s'étend transversalement à la direction longitudinale du caniveau à une extrémité et une nervure complémentaire également transversale à l'autre extrémité.

20. Elément de caniveau de câbles selon une des revendications précédentes, caractérisé en ce que les extrémités côté frontal des parois latérales sont pourvues de moyens d'encliquetage ou d'enclenchement (21) complémentaires.

21. Elément de caniveau de câbles selon une des revendications précédentes, caractérisé en ce que le couvercle (2), à ses extrémités, est pourvu de moyens de fermeture à recouvrement (29) complémentaires pour un contact réciproque avec recouvrement de deux couvercles.

22. Elément de caniveau de câbles selon une des revendications précédentes, caractérisé en ce que pour l'ancrage dans le sol, des broches d'ancrage (14) sont insérées dans les ouvertures (11) prévues dans le fond, broches d'ancrage dont la tête est conformée en disque et dont l'extrémité libre porte des crochets (15) élastiques.

23. Elément de caniveau de câbles selon une des revendications précédentes, caractérisé en ce qu'un moyen de division de l'espace intérieur (37) pour former des chambres de câbles séparées disposées parallèlement, côte à côte, dans la direction longitudinale du caniveau peut être monté libre dans la direction transversale du caniveau, ce moyen de division de l'espace intérieur (37), au moins dans sa région inférieure, étant adapté à l'écartement intérieur des parois latérales .

24. Elément de caniveau de câbles selon une des revendications précédentes, caractérisé en ce que des ouvertures (11) pour des moyens d'ancrage (14) sont prévues dans la direction longitudinale du caniveau de câbles, dans le fond de celui-ci, dans le voisinage immédiat de l'axe médian, de part et d'autre de ce dernier.

25. Elément de caniveau de câbles selon une des revendications précédentes, caractérisé en ce que l'élément de caniveau de câbles (1), dans la région des extrémités de son fond, comporte des zones de recouvrement complémentaires pour un contact réciproque avec recouvrement de deux éléments de caniveau de câbles.

26. Elément de caniveau de câbles selon la revendication 12, caractérisé en ce qu'il est prévu entre deux charnières (3), au moins une zone située sur l'axe de pivotement, dans laquelle une liaison à rainure et languette (44, 45) empêchant le soulèvement du couvercle lorsque celui-ci (2) est fermé est prévue entre le couvercle (2) et la paroi latérale voisine du caniveau de câbles (1).
